Europäisches Patentamt

European Patent Office

Office européen des brevets

(11) Numéro de publication: **0 406 504 A1**

# DEMANDE DE BREVET EUROPEEN

(21) Numéro de dépôt: 89440066.2

(51) Int. Cl.5: **C04B 14/10**

(22) Date de dépôt: **06.07.89**

(43) Date de publication de la demande:
**09.01.91 Bulletin 91/02**

(84) Etats contractants désignés:
**AT BE CH DE ES FR GB GR IT LI LU NL SE**

(71) Demandeur: **PIERI S.A.**

**F-71580 Saillenard(FR)**

(72) Inventeur: **Ambroise, Jean**
**255 Boulevard Pinel**
**F-69500 Bron(FR)**
Inventeur: **Gniewek, Joseph**
**90 Avenue Charles de Gaulle**
**F-69300 Caluire(FR)**
Inventeur: **Pera, Jean**
**16 Rue Gervais Bussière**
**F-69100 Villeurbanne(FR)**

(74) Mandataire: **Arbousse-Bastide, Jean-Claude**
**Philippe**
**CABINET ARBOUSSE BASTIDE 20, rue de**
**Copenhague**
**F-67000 Strasbourg(FR)**

(54) **Procédé de fabrication de béton assurant la conservation de sa teinte dans le temps.**

(57) Procédé de fabrication de béton assurant la conservation de sa teinte dans le temps.

On incorpore au mélange de départ comprenant le sable, les granulats et le ciment une quantité de métakaolin égale à 5,40 % en poids de la quantité de ciment mise en oeuvre.

EP 0 406 504 A1

## PROCEDE DE FABRICATION DE BETON ASSURANT LA CONSERVATION DE SA TEINTE DANS LE TEMPS.

La présente invention a pour objet un procédé de fabrication de béton assurant une bonne conservation de sa teinte dans le temps. Il a également pour objet le produit industriel nouveau que constitue le béton obtenu par ce procédé.

On sait que les bétons courants sont composés de sable, de granulats, de ciment et d'eau, le ciment représentant généralement 12 à 17 % de la masse totale du béton, soit 300 à 400 kg/m3. Ils peuvent renfermer en outre divers adjuvants tels que des charges, des fluidifiants ou des accélérateurs de prise.

Pour obtenir des bétons colorés, on incorpore au mélange un pigment ou un mélange de pigments en faibles proportions.

Toutefois les colorations sont difficiles à uniformiser dans la masse du béton, et d'autre part elles ne sont pas stables dans le temps, tendant à s'estomper progressivement au fur et à mesure que le béton durcit puis sèche à l'air. Ce phénomène s'explique par le fait que la prise du ciment dans le béton s'accompagne d'une libération de chaux qui migre en surface au cours du séchage et se carbonate à l'air, entraînant le dépôt à la surface du béton de traces blanches de carbonate de calcium, insoluble dans l'eau. Il s'ensuit un blanchiment progressif du béton en surface, qui peut s'étaler sur une assez longue période, de l'ordre d'une année ou plus, estompant peu a peu sa couleur d'origine, que cette couleur soit la teinte "naturelle" du béton ou celle obtenue par addition de pigments.

La présente invention a pour but de remédier à cet inconvénient en proposant un procédé de fabrication de béton assurant une bonne conservation de sa teinte d'origine.

La présente invention a ainsi pour objet un procédé de fabrication de béton, teinté ou non, qui se caractérise essentiellement en ce qu'on adjoint au ciment qui entre dans sa composition une certaine quantité de métakaolin, pouzzolane de synthèse dérivée du kaolin.

Le métakaolin, obtenu par cuisson du kaolin à une température d'environ 700°C, présente en effet, contrairement au kaolin, la propriété d'être réactif vis-à-vis du ciment, cette propriété tenant à la déshydratation et à la modification cristallographique conjointes résultant de la cuisson du kaolin.

La réactivité du métakaolin vis-à-vis du ciment, en présence d'eau, tient à sa capacité à former avec la chaux des silicates, selon une réaction du type pouzzolanique couramment mise en oeuvre dans la fabrication des bétons.

Cette propriété du métakaolin est utilisée dans le procédé selon l'invention, sa réaction avec la chaux libérée au cours de la prise du ciment ayant pour double effet, d'une part d'empêcher la migration de cette dernière à la surface du béton, et d'autre part de provoquer une diminution notable de la porosité du béton, cette diminution de porosité tenant à une diminution sensible du diamètre des capillaires qui apparaît déjà pour de faibles teneurs en métakaolin, de l'ordre de 5 % en poids par rapport au ciment : ainsi, pour une teneur de 10 % en poids de métakaolin, on peut observer que le diamètre des capillaires est réduit jusqu'à représenter le tiers du diamètre des capillaires d'un béton classique de même composition.

Par ailleurs, le métakaolin réagissant avec la chaux forme un nouveau liant similaire au ciment de départ, et il en résulte des propriétés mécaniques améliorées du béton obtenu, en particulier une résistance à la compression accrue ; cet accroissement peut être de 10 a 15 % à 28 jours pour un béton dans lequel 20 % du ciment est remplacé par du métakaolin.

Enfin, dans le cas de bétons teintés, le métakaolin, qui se présente sous forme d'une poudre finement divisée, permet une meilleure uniformisation de la teinte souhaitée si on le mélange avec le ou les pigments choisis préalablement à son incorporation au mélange sable-granulats-ciment.

Le métakaolin est avantageusement mis en oeuvre, dans le procédé selon l'invention, à raison de 5 à 40 %, et de préférence 10 à 30 % en poids par rapport au ciment. Il peut être soit ajouté au ciment, ce qui augmente la teneur globale en liant du béton, soit substitué pour partie au ciment, ce qui maintient la teneur globale en liant du béton.

Les pigments mis en oeuvre pour teinter le béton sont avantageusement mélangés au métakaolin préalablement à leur incorporation au mélange sable-granulats-ciment, et préalablement à l'adjonction d'eau, de manière à obtenir une meilleure uniformisation de la teinte dans la masse de béton.

Ces pigments peuvent être n'importe quel pigment habituellement utilisé pour ce type de produit, et ils sont mis en oeuvre dans les proportions couramment utilisées, soit de 0,05 à 5 % en poids par rapport au liant.

Un mode de réalisation particulièrement avantageux du procédé selon l'invention consiste à réaliser un prémélange du métakaolin et d'une partie du ciment, et à ajouter à ce prémélange les pigments préalablement à la fabrication du béton proprement dite : cette façon de procéder résulte en effet en une uniformisation optimum de la teinte que l'on désire obtenir.

Outre le sable, les granulats, le ciment, le métakaolin et les pigments, le béton selon l'invention peut évi demment renfermer un ou plusieurs adjuvants utilisés couramment pour ce type de produit, tels que des charges, des fluidifiants, des accélérateurs de prise etc...

Le procédé selon l'invention offre l'avantage, déjà exposé, de conduire à l'obtention de bétons, teintés ou non, dont la teinte ne s'altère pas dans le temps et qui présentent une résistance à la compression accrue et une porosité réduite.

Il s'ensuit que les bétons obtenus par le procédé selon l'invention présentent une résistance mécanique et une résistance chimique accrues, ce qui autorise leur utilisation pour la réalisation d'ouvrages d'art ou de murs anti-bruits, exposés aux sels de déverglaçage, ainsi que pour la réalisation de parements exposés à des pluies acides, etc...

Les exemples qui suivent, fournis à titre d'illustration de la présente invention, décrivent quelques modes de réalisation du procédé qui en fait l'objet, étant bien entendu qu'ils ne présentent aucun caractère limitatif vis-à-vis de l'invention.

## Exemple 1.

Cet exemple illustre l'utilisation du métakaolin dans un béton en remplacement d'une partie du ciment.

Le béton A est un béton de référence, tandis que le béton B est un béton selon l'invention, et on réalise plusieurs plaques avec chaque composition.

| Ingrédients | A | B |
|---|---|---|
| Sable concassé 0/4 calcaire (Hauteville) | 821 kg = 34,97 % | 821 kg = 34,97 % |
| Granulat concassé 8/12 cal-caire (Hauteville) | 1000 kg = 42,6 % | 1000 kg = 42,6 % |

| | A | B |
|---|---|---|
| Ciment gris CPA 55R | 350 kg = 14,9 % | 210 kg = 8,9 % |
| Prémélange: | | |
| Métakaolin | | 70 kg = 3,0 % |
| Ciment CPA 55R | O | 70 kg = 3,0 % |
| Oxyde de fer rouge | | |
| BAYFERROX 130 de BAYER | | 0,7kg = 0,03% |
| Oxyde de fer rouge BAYFERROX 130 de BAYER | 0,7 kg = 0,03 % | O |
| Eau | 175 l = 7,5 % | 175 l = 7,5 % |

Les compositions A et B renferment chacune 350 kg de liant total, dont 70 kg de métakaolin dans la composition B.

Après démoulage, la conservation des bétons est réalisée pendant deux semaines à 25°C et à 80 % d'humidité relative.

Au bout de ce laps de temps on peut observer que le béton B présente par rapport au béton A les avantages suivants :
- uniformité de la teinte dans les différentes plaques réalisées.
- stabilité de la teinte.
- résistance mécanique et chimique accrues.
- meilleure protection des armatures, liée à une porosité moindre.

## Exemple 2.

Cet exemple illustre l'utilisation du métakaolin dans un béton composite ciment/fibre de verre.

Le béton A est également un béton de référence, et le béton B un béton selon l'invention, et on réalise plusieurs plaques avec chaque composition.

| Ingrédients | A | B |
|---|---|---|
| Ciment blanc CPA 55 | 50 % | 36 % |
| Sable 0/2 siliceux | 27 % | 27 % |
| Fibres de verre alcali-résistant | 2 % | 2 % |
| Métakaolin | 0 % | 14 % |
| Carbonate de calcium (0-0,1 mm) | 20,3 % | 20,3 % |
| Bleu lumière 100 de BAYER | 0,2 % | 0,2 % |
| Fluidifiant à base de résine mélamine-formol | 0,5 % | 0,5 % |

Le métakaolin dans le béton B est apporté sous forme d'un prémélange réalisé a l'aide d'une partie des ingrédients, à savoir :

| | |
|---|---|
| Métakaolin | 14 % |
| Ciment | 10 % |
| Carbonate de calcium | 20,3 % |
| Bleu lumière | 0,2 % |
| Fluidifiant | 0,5 % |

La conservation des bétons ainsi obtenus est réalisée pendant deux semaines à 30°C et 80 % d'humidité relative.

Les avantages du béton B par rapport au béton A s'avèrent être les suivants :
- uniformité de la teinte dans les différentes plaques réalisées.
- stabilité de la couleur bleu pastel dans le temps.

On peut en outre observer, après un laps de temps plus long, de l'ordre de 1 an, que la fibre de verre bénéficie, dans le béton B, d'une protection accrue, en raison de la moindre formation de chaux.

## Exemple 3.

Cet exemple illustre l'utilisation du métakaolin dans un béton coulé en place. Le béton A constitue toujours le béton de référence, les bétons B et C étant des bétons selon l'invention.

| Ingrédients | A | B | C |
|---|---|---|---|
| Sable silico-calcaire 0/4 | 31 % | 31 % | 31 % |
| Granulat silico-calcaire 4/8 | 5,5 % | 5,5 % | 5,5 % |
| Granulat silico-calcaire 8/12 | 15,5 % | 15,5 % | 15,5 % |
| Granulat silico-calcaire 12/20 | 27 % | 27 % | 27 % |
| Ciment gris CPA 55R | 14 % | 11,2 % | 14 % |
| Métakaolin | 0 % | 2,8 % | 2,8 % |
| Eau | 7 % | 7 % | 7 % |

Le béton B, dans lequel le métakaolin remplace une partie des 14 % de ciment, présente par rapport au béton A les avantages ci-après :
- obtention d'une teinte beaucoup plus claire et uniforme.
- stabilité de la teinte dans le temps.
- résistance accrue au gel et aux sels de déverglaçage.
- meilleure protection des armatures, ces deux dernières propriétés tenant à la porosité moindre du béton B.

Le béton C, dans lequel le métakaolin est ajouté aux 14 % de ciment, présente par rapport au béton A les mêmes avantages que le béton B, avec des caractéristiques quelque peu amélio rées en raison de sa teneur en liant plus élevée.

La stabilité de la teinte dans les bétons des trois exemples ci-dessus peut être mise en évidence par des mesures de luminance effectuées au cours du vieillissement.

## Exemple 4.

Cet exemple porte sur des essais comparatifs mettant en évidence par des mesures de luminance la stabilité de la teinte des bétons selon l'invention.

On réalise des plaques de béton de différentes couleurs de dimensions 40 X 80 X 5 cm, la composition du béton étant la suivante, en pourcent en poids :

| Granulat 3/8 | 46 % |
|---|---|
| Sable 0/3 | 15 % |
| Liant | 15 % |
| Eau | 8 % |
| Colorant | 0,4 % en poids du liant. |

Le liant est, dans le béton de référence, constitué de 100 % de ciment blanc, et dans les différents bétons selon l'invention, de 80 % de ciment blanc et 20 % de métakaolin.

On constate que par rapport au béton de référence l'indice de luminance des bétons selon l'invention est plus faible, atteignant 93 % de la valeur de référence, mais cet indice est stable dans le temps.

Une analyse complémentaire par spectrométrie infra-rouge sur les produits d'hydratation de surface confirme ces résultats : si la quantité de carbonate de calcium est la même au moment du démoulage à 24 heures, on constate que la présence du métakaolin permet de réduire de 50 % la quantité de carbonate présent en surface après 7 jours de conservation à 70 % d'humidité relative.

**Revendications**

1) Procédé de fabrication de béton assurant la conservation de sa teinte dans le temps, caractérisé en ce qu'il consiste à incorporer au mélange de départ comprenant le sable, les granulats et le ciment, préalablement à l'adjonction d'eau, une quantité de métakaolin égale à 5 à 40 % en poids de la quantité de ciment mise en oeuvre.

2) Procédé selon la revendication 1, caractérisé en ce que le métakaolin est ajouté au ciment.

3) Procédé selon la revendication 1, caractérisé en ce que le métakaolin est substitué pour partie au ciment.

4) Procédé selon l'une quelconque des revendications précédentes, caractérisé en ce que le métakaolin est mis en oeuvre a raison de 10 à 30 % en poids par rapport au ciment.

5) Procédé selon l'une quelconque des revendications précédentes, caractérisé en ce que l'on incorpore également au mélange de départ au moins un pigment destiné à colorer le béton.

6) Procédé selon la revendication 5, caractérisé en ce que le ou les pigments mis en oeuvre sont mélangés au métakaolin préalablement à son incorporation au mélange de départ.

7) Procédé selon l'une quelconque des revendications précédentes, caractérisé en ce que le mélange de départ renferme en outre un ou plusieurs adjuvants couramment utilisés pour ce type de produit.

8) A titre de produit industriel nouveau, le béton obtenu par le procédé qui fait l'objet des revendications 1 à 7.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | CHEMICAL ABSTRACTS, vol. 89, no. 16, Octobre 1978, page 324, abrégé no. 134678y, Columbus, Ohio, US; & JP-A-78 50 229 (KONDO) | 1,2,7,8 | C 04 B 14/10 |
| X | EP-A-0 252 848 (VETROTEX SAINT-GOBAIN) * Revendications 1-3; page 4, ligne 62 - page 5, ligne 21 * | 1-4,7,8 | |

DOMAINES TECHNIQUES
RECHERCHES (Int. Cl.5)

C 04 B

Le présent rapport a été établi pour toutes les revendications

| Lieu de la recherche | Date d'achèvement de la recherche | Examinateur |
|---|---|---|
| LA HAYE | 27-02-1990 | THEODORIDOU E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P0402)